# EUROPEAN PATENT SPECIFICATION

(11) **EP 0 036 185 B1**
(45) Date of publication and mention of the grant of the patent: **01.07.1987**
(21) Application number: 81101837.3
(22) Date of filing: 12.03.1981
(51) Int. Cl.: G06F 15/00, G06F 13/36, G06F 13/40, G06F 13/42

(54) **Information processing system incorporating 1-chip arithmetic control unit of very large scale integrated semiconductor element**
Datenverarbeitungssystem mit einer arithmetischen Ein-Chip-Kontrolleinheit unter Anwendung einer hochintegrierten Halbleitervorrichtung
Système de traitement d'information incorporant une unité de commande arithmétique formée sur une seule puce par application d'un circuit semiconducteur à haute intégration

(30) Priority: 19.03.1980 JP 35499/80; 19.03.1980 JP 35501/80; 19.03.1980 JP 35502/80
(43) Date of publication of application: 23.09.1981
(60) Divisional application: 85109933.3
(73) Proprietor: KABUSHIKI KAISHA TOSHIBA, Kawasaki-shi, Kanagawa-ken 210 (JP)
(72) Inventor: Kinoshita, Tsuneo, Tokyo (JP); Sato, Fumitaka, Tokyo (JP); Yamazaki, Isamu, Takatsu-ku Kawasaki-shi (JP)
(74) Representative: Henkel, Feiler, Hänzel & Partner

## Description

The present invention relates to an information processing unit incorporating a 1-chip arithmetic control unit of a very large scale integrated semiconductor element.

With the recent developments in semiconductor techniques, the arithmetic control unit, which is the main part of an information processing unit, can now be formed with a single very large scale integrated semiconductor element (to be referred to as VLSI for brevity hereinafter). When the arithmetic control unit is formed of a VLSI, the performance of the unit may be improved, the unit may be made more compact, and the performance to price ratio may be improved. However, there are also limits on the number of pins of the package, the power consumption, the capacity and the performance. Application techniques of VLSI of this type require further development to solve these problems. One of the problems to be solved by such techniques may be summarized as follows. Input/output devices (to be referred to as t/0 for brevity hereinafter) connected to the arithmetic control unit through input/output buses mostly adopt a unit of 8 bits (1 byte) for the data transfer width. However, an t/0 has recently been developed which employs a unit of 16 bits as the data transfer width for performing data transfer with the I/Os at a higher speed. Thus, the 1-chip arithmetic control unit described above must be of the construction according to which it is possible to perform smooth data transfer between these two different kinds of IIOs.

There is another problem. The 1-chip arithmetic control unit which is the subject matter of the present invention is so constructed that the control is performed by microprograms, and a memory for storing these microprograms (to be referred to as a ROM hereinafter) is externally attached to the chip due to the limits imposed by the chip. Although it is possible to freely write in the externally attached ROM, the following limits are imposed on the selection of the ROM addresses. For example, when the operation code (OP code) of the user instruction is of 8-bit construction, instructions of up to 2⁸ = 256 kinds may be prepared. In correspondence with these OP codes of 8 bits, microinstructions are stored in the 0 to 255 addresses of the externally attached ROM. The microinstructions and the user instructions are different in bit constructions and contents. Accordingly, with an instruction of a complex function such as a flowing instruction, it becomes impossible to translate one user instruction with only one microinstruction. In such a case, it becomes necessary to store the microinstruction from the second word in a certain address region of the ROM so that this address may be automatically selected. Further, it is not necessary to use all of the 2⁸ = 256 kinds of user instructions; only part of them are usually used. Thus, when an OP code with no corresponding user instruction is designated by mistake (e.g., when the program overruns), it is necessary to detect that this OP code is an illegal instruction at the side of the microinstruction. One of the technical problems for an arithmetic control unit formed on one chip is to find out how to perform these controls with satisfactory efficiency. In addition to this, it is desired not to fix the correspondence between the microprograms and the OP codes, but to vary the correspondence as required, so that the overall unit can perform with an instruction system different from the original system.

As the logic functions within the chip increase, the kinds of the connection signals with the outside increase. However, the external connection pins which may be formed on the package of the 1-chip arithmetic control unit are limited. Another problem with the arithmetic control unit is, therefore, how to use this limited number of external connection pins to obtain more functions within the chip.

Prior art document JP-A-5437438 (= US-A-4 250 547) discloses an information processing system comprising an arithmetic control unit, a control memory external to said arithmetic control unit in which can be stored a plurality of programmed instructions, a main memory and I/ 0 units, a common bus divided by separation means into a first exclusive bus for interconnecting the arithmetic control unit and the control memory, and a second exclusive bus for interconnecting the main memory and the I/O units. The separation means is controlled by the arithmetic control unit for making it possible to perform operations in parallel and simultaneously between the units coupled to the respective exclusive buses, and the arithmetic control unit includes means for causing said separation means to selectively either couple said first and second exclusive buses or to separate said common bus into said first and second exclusive bus, thereby allowing either the transfer of information between the arithmetic control unit and the main memory, between the arithmetic control unit and the t/0 units, or the transfer of information between the main memory and the I/O units irrespective of the processing of the arithmetic control unit, while information is transmitted between the arithmetic control unit and the control memory. In this prior art system, the first and second bus portions consist of first and second address bus portions which unidirectionally transfer address signals and first and second data bus portions which bidirectionally transfer data signals. Thereby the separation means for the address bus portion and data bus portions are controlled in a different way and the arithmetic control unit needs a large number of terminals.

It is an object of the present invention to provide an information processing system incorporating a 1-chip arithmetic control unit of a VLSI wherein the arithmetic control unit is capable of performing the transfer of input and output information with a plurality of I/Os of different data transfer widths so that the switching control of different data transfer widths, and the input/ output control may be effectively performed with the limited number of external connection pins of the arithmetic control unit.

The present invention provides an information processing system comprising:
an arithmetic control unit fabricated on one chip, a control memory external to said arithmetic control unit in which can be stored a plurality of microprograms each comprising a plurality of microinstructions for controlling said arithmetic control unit, a common bus coupled to said arithmetic control unit, a memory bus external to said arithmetic control unit adapted to be coupled to a main memory external to said arithmetic control unit, an input/output bus external to said arithmetic control unit adapted to be coupled to at least one input/output device, said common bus being coupled to said control memory, said memory bus and said input/output bus for transferring information between the arithmetic control unit and the control memory between the arithmetic control unit and the memory bus and between the arithmetic control unit and the input/output bus, first gate means for separating said common bus exteriorly of said arithmetic control unit into a first bus portion to which are coupled said arithmetic control unit and said control memory and a second bus portion to which are coupled said memory bus and said input/output bus, said arithmetic control unit including first means for causing said first gate means to selectively either couple said first and second bus portions or to separate said common bus into said first and second bus portions, said first means causing said first gate means to separate said common bus into said first and second bus portions when microinstructions are to be read from said control memory to said arithmetic control unit, and further said arithmetic control unit being coupled to said control memory and microinstructions being read out of said control memory onto said first bus portion of said common bus when said first gate means is caused to separate said common bus into said first and second bus portions, said information processing system being characterized in that said first means is connected to second gate means provided between said control memory and said common bus and to third gate means connected to the first portion of the common bus for taking in external signals including a bus width setting signal from the input/ output device for performing data transfer with the arithmetic control unit through the common bus so that an output enable signal applied by said first means is used as a timing signal for taking in microinstructions read out from the control memory through the second gate means, as a gate control signal for separating the common bus in the first and second bus portions by means of the first gate means and as a timing signal for taking in the external signals through the third gate means.

The present invention provides an information processing system incorporating a 1-chip arithmetic control unit of a VLSI wherein the arithmetic control unit is capable of constantly smoothly performing the transfer of input and output data between a plurality of I/Os with different data widths so that the switching control of the data transfer width and the input/output control may be efficiently performed with a limited number of external connection pins of the arithmetic control unit. In this information processing system input of microinstructions from the control memory, output of the memory address and input/output of the memory data between the external main memory and the 1/0 devices, and data input/ output on the input/output bus are performed through the single common bus, thereby reducing the number of external connection pins of said arithmetic control unit. Furthermore, in the system according to the present invention decoding of the user instruction and the fetching of the microinstruction are performed at the same time to improve the throughput, and any desired instruction device other than the original instruction device of the system may be adopted as required while still employing the logic elements within the chip. The information processing system performs exchange with the outside of a plurality of kinds of data with different phases through a main bus wherein a plurality of kinds of status signals generated outside upon exchange of respective data may be taken in the arithmetic control unit with an extremely small number of external connection pins so that more logic functions may be incorporated within the chip while efficiently utilizing the limited number of external connection pins.

This invention can be more fully understood from the following detailed description when taken in conjunction with the accompanying drawings, in which:
Fig. 1 is a block diagram showing the basic construction of the 1-chip arithmetic control unit which applies the present invention;
Fig. 2 is a detailed block diagram of the arithmetic control unit shown in Fig. 1;
Fig. 3 is a view showing the connections between the arithmetic control unit shown in Fig. 2 and the I/Os;

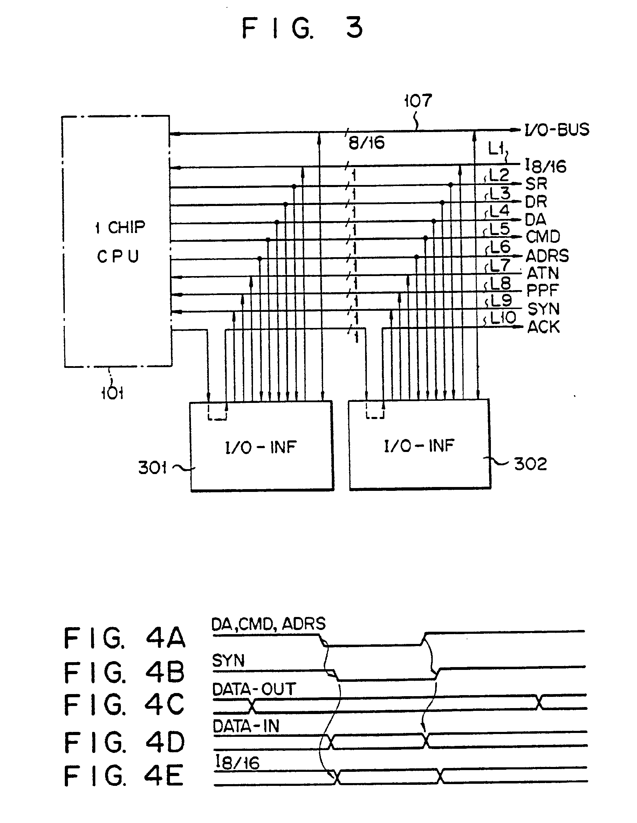

Figs. 4A through 4E are timing charts for input/ output control signals, wherein Fig. 4A shows the output timing chart of a DA (Data Available) signal, a CMD (Command) signal, and an ADRS (Address) signal; Fig. 4B shows the input timing chart of a SYN (Synchronous) signal indicating a response signal from an external unit; Fig. 4C shows the output timing chart of a DATA-OUT signal for outputting data from the C-BUS to the I/O-Bus; Fig. 4D shows the input timing chart of a DATA-IN signal for outputting data from the I/O-BUS to the C-BUS; and Fig. 4E shows the input timing chart of a bus width setting signal I 8/16 of the data transfer from the I/O; and
Fig. 5 shows the relation of the B-ROM disposed inside the 1-chip CPU, the C-ROM disposed externally, and the TEST signal.

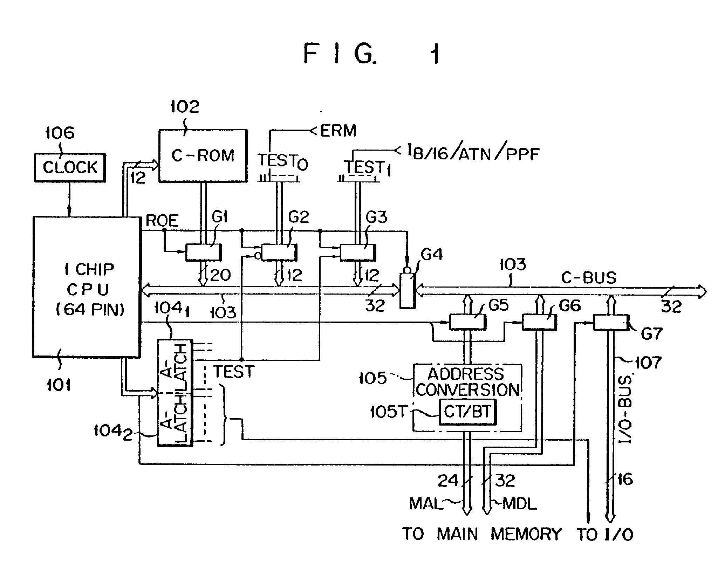

The present invention will now be described by way of its examples, referring to the accompanying drawings. Fig. 1 is a block diagram illustrating the basic construction of an information processing unit incorporating a 1-chip arithmetic control unit which is the subject matter of the present invention. Referring to the figure, reference numeral 101 denotes a 1-chip arithmetic control unit (to be referred to as 1-chip CPU hereinafter) formed on one chip by a very large- scale integrated semiconductor element (VLSI). The number of external connection pins formed for one package is 64. Reference numeral 102 denotes an externally attached control memory (to be referred to as a C-ROM) for storing the microprograms consisting of a plurality of microinstructions for controlling this 1-chip CPU 101. Reference numeral 103 denotes a common bus (to be referred to as a C-BUS) as a common data transmission line between the 1-chip CPU 101 and the external unit. This common bus 103 is constructed with the 32-bit width, and through it pass time-divisionally the output data (microinstructions) of the C-ROM 102, the memory address, the memory data, the i/0 (input/output) data, and so on. Reference numerals 104, and 104₂ denote addressable latch circuits externally attached to the 1-chip CPU 101; they have the function of decoding. These addressable latch circuits 104,, 104₂ output a plurality of kinds of external control signals based on the control signal output from the 1-chip'CPU 101. Among these, the addressable latch circuit 104₂ outputs 8 kinds of control signals for the I/Os which will be described in more detail hereinafter. Reference numeral 105 denotes an address conversion mechanism for enlarging the address space of the main ROM and for obtaining the physical address of the main ROM, referring to a conversion table 105T based on the logic address, the segment information and so on which are supplied from the 1-chip CPU 101 through the C-BUS 103. This address conversion mechanism 105 takes different function constructions according to the two kinds of external setting signals (BTMD, CTMD) included in the external signal group (TEST 0) for designating the address conversion system. One of them is the address conversion mechanism by base modification and the other is that by page modification. The conversion table 105T, which is the main part of the address conversion mechanism 105, is of different use construction (dividing method of the registers) for the case of the base modification and for the case of the page modification. The table used for the base modification will be referred to as a BT (Base address Table) and the table used for the page modification will be referred to as a CT (Conversion Table). Reference numeral 106 denotes a clock pulse generator for generating basic clock pulses of the 1-chip CPU 101. Reference numeral 107 denotes an input/output bus (to be referred as l/O-BUS) for transferring various kinds of data between the 1-chip CPU 101 and the input/output devices (to be referred to as I/Os hereinafter). The VO BUS has a 16-bit width and may be used with an 8-bit width or with a 16-bit width depending upon the data transfer width of the I/O for performing data transfer with the 1-chip CPU 101. G1 to G7 are gate circuits for controlling the transfer on the C-BUS 103. When the gate circuit G1 is opened by the control signal (ROE) from the 1- chip CPU 101 and the microinstruction (2Q bits) read out from the C-ROM 102 is taken in the 1-chip CPU 101 through the C-BUS 103, the gate circuit G4 is closed and the C-BUS 103 is separated from this gate circuit G4. In this case, one of the gate circuits G2 and G3 is selectively opened when the gate circuit G1 opens. In the initializing time or in the starting time, upon the opening of the gate circuit G2, a group of external signals (12 bits) of TEST 0 are simultaneously taken in the 1-chip CPU 101 through the C-BUS 103 together with the microinstructions from the C-ROM 102. In the general reading mode of the microprograms, upon opening the gate circuit G3, a group of external signals (12 bits) of TEST 1 are simultaneously taken in the 1-chip CPU 101 together with the microinstructions from the C-ROM 102. An external setting signal "ERM" of TEST 0 is also received as one of the group of external signals taken in the 1-chip CPU 101 together with the microinstructions.

The external input signals of I 8/16, ATN, and PPF are also included in the group of external signals of TEST 1. These signals will be described in more detail hereinafter. Except during the read cycle of the microprograms and except durng the main ROM access by the DMA (Direct Memory Access) unit, the gate circuit G4 is controlled to be opened, and the gate circuits G5, G6 and G7 are selectively opened. Thus, data transfer among the 1-chip CPU 101, the address conversion mechanism 105, the main memory, and other 1/0 devices is performed through the C-BUS 103 and the various buses selectively connected to this C-BUS 103. MAL denotes a memory address line and MDL denotes a memory data line, both included in the memory bus.

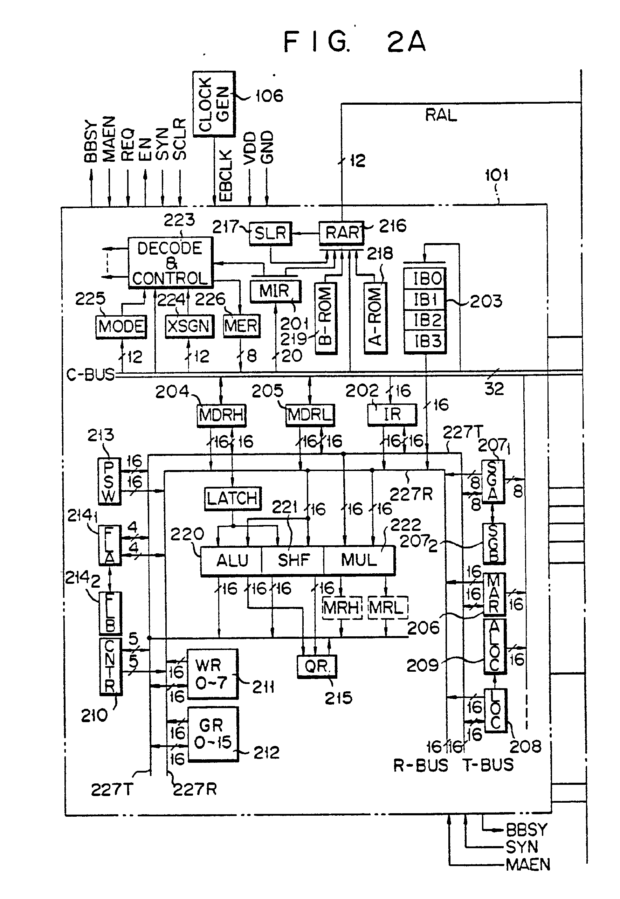

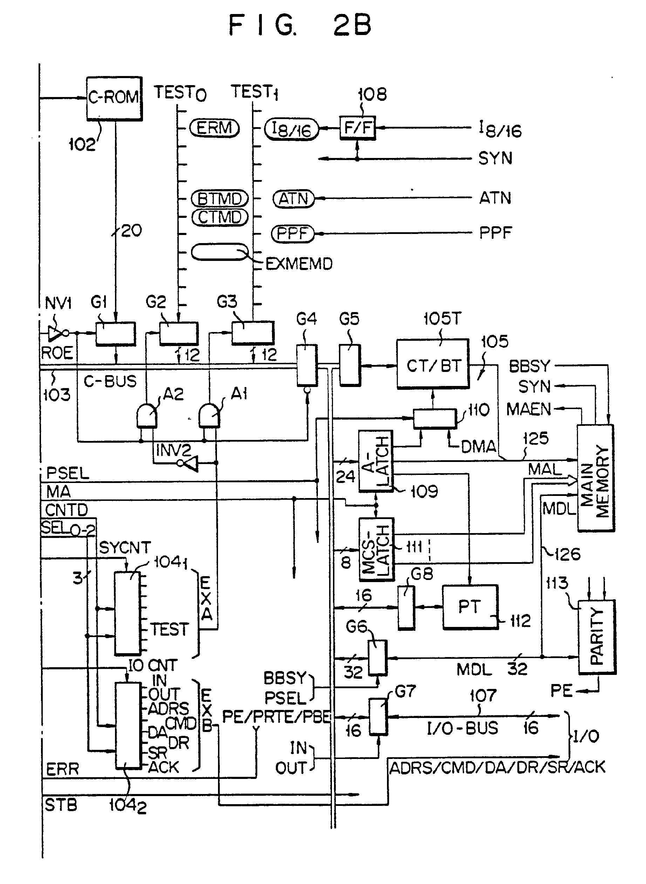

Figs. 2A and 2B are block diagrams illustrating the construction of Fig. 1 in more detail. The 1- chip CPU 101 is connected to the external circuits by a total of 64 pins including the C-BUS pin of 32- bit width. The chip includes the following logic functions:
1) MIR (Micro Instruction Register) ... 201: 20 bits This register stores the microinstructions read out from the C-ROM 102. The microinstructions read out from the C-ROM are set in the register through the C-BUS 103.
2) IR (Instruction Register) ... 202: 16 bits

This register holds the user instruction which is being executed. The user instruction is transferred from registers IBO to IB3 for fetching the user instruction to this register.
3) IBO to IB3 (Instruction Buffer)... 203: 16 bits x 4 This register performs the fetching of the user instruction. When the execution of the user instruction held in the IR 202 is completed, the next user instruction is transferred from this register to the IR 202. Although it is possible to read out the contents of the instruction buffers IBO 203 to IB3 203 to internal buses T-BUS 227T and R-BUS 227R by the microinstruction, it is impossible to write from the T-BUS 227T or from the R-BUS 227R. Writing of the user instruction in IBO 203 to IB3 203 is performed through the C-BUS 103.
4) MDRH (Memory Data Register High) ... 204: 16 bits

This register holds the 16 upper significant bits among the data of 32 bits on the C-BUS 103. This register is capable of setting the data from the C-BUS 103 and of supplying data to the C-BUS 103. This register is further capable of supplying data to the R-BUS 227R and the T-BUS 227T and setting data from the T-BUS 227T.

### 5) MDRL (Memory Data Register Low) ... 205: 16 bits

This register holds the 16 lower significant bits among the data of 32 bits on the C-BUS 103. This register is capable of setting data from the C-BUS 103 and of supplying data to the C-BUS 103. This register is further capable of supplying data to the R-BUS 227R and the T-BUS 227T and of setting data from the T-BUS 227T.

### 6) MAR (Memory Address Register) ... 206: 16 bits

This register holds the address (logic address) of the main ROM, and places the address information of 24 bits to the C-BUS 103 with 8 bits of register SGA 207, for holding the segment information. Since the C-BUS 103 is time-divisionally used as has been described, an address latch circuit (ALATCH) is disposed externally of the chip for latching the address information therein. This MAR 206 functions to count with units of "2" or "4".

### 7) SGA, SGB (Segment Register A, B) ... 207,, 207₂: 8 bits x 2

This register enlarges the logic address space and stores the information for designating the segment of the conversion table 105T disposed externally. The content of this register together with the content of the MAR 206 form the generating soure of the physical address. SGA 207, is normally used, and SGB 207₂ is temporarily used for particular instructions.

### 8) LOC (Location Counter) ... 208: 16 bits

This counter holds the user instruction address, and counts in increments of "2" at every fetching operation of the user instruction for holding the next user instruction address.

### 9) ALOC (Advanced Location Counter) ... 209: 16 bits

This counter stores the address of the user instruction to be read out next from the main ROM. This counter is advanced by 2 or 4 bytes from the address held by the LOC 208 for controlling the fetching operation.

### 10) CNTR (Counter Register) ... 210: 8 bits

This is a binary subtracting counter and is used for loop count, multiplication, division, shifting and so on of the microprograms. ,

### 11) WRO to WR7 (Working Register) ... 211: 16 bits x8

This register is used for holding a temporary result in the course of an operation in the microprogram. This register may be directly designated as the source or destination register by the microinstruction.

### 12) GRO to GR15 (General Register) ... 212: 16 bits x 16

This is a general-purpose register and may be accessed by user instruction. It is used as an accumulator, index register and so on.

### 13) PSW (Program Status Word) ... 213: 16 bits

This is a register for storing the internal status of the CPU; it holds the various internal statuses such as the interrupting mask, the internal status of the operation result, the memory address mode, the master/slave mode and so on.

### 14) FLA, FLB (Flag Register A, B) ... 214,, 214_{:}, 4 bits x 2

This register stores the status of the arithmetic/ logic operation.

### 15) QR (Quotient Register) ... 215: 16 bits

This register is used as an additional register to ALU 220 for arithmetic/logic operations, and to SHF 221 for high speed shift.

### 16) RAR (ROM Address Register) ... 216: 12 bits

This register holds the address of the microinstruction to be read out next. The address stored in this RAR 216 is supplied to the C-ROM 102 through a ROM address line (RAL) of 12-bit width. RAR 216 has a counter function to count in unitary increments every time a microinstruction is read out.

### 17) SLR (Subroutine Link Register)... 217: 12 bits

This register stores the return address when performing the subroutine branch with the microinstruction.

### 18) A-ROM (lnternal.ROM.A)... 218: 12 bits x 2

This internal ROM stores the starting address of the microprogram after system clear, and the starting address of the microprogram after an interruption has been detected.

### 19) B-ROM (Internal ROM B)... 219: 12 bits x 256

This internal ROM forms the correspondence table of the microinstruction with the OP codes of the user instructions, and has addresses corresponding to the addresses (0 to 255) of the C-ROM 102 capable of being designated by the OP code part (8 bit) of the IR 202. Each address of the B-ROM 219 stores information on the judgement whether the microinstruction corresponding to the OP code is terminated in one step, requires two steps or more, or is an illegal instruction. That is, all "1" when the microinstruction is terminated in one step, all "0" in the case of an illegal instruction, and the microinstruction address for the second step when the microinstruction requires two steps or more are stored in the B-ROM 219. When the microinstruction may be terminated in one microstep, this microinstruction is stored in the addresses of the C-ROM 102 corresponding to the addresses of the B-ROM 219. When the microinstruction requires two microsteps or more, the microinstruction of the first step is stored in the C-ROM 102, and the C-ROM address in which is stored the microinstruction of the second step is stored in the B-ROM 219. In the case of an illegal instruction, the starting address of the microprogram for processing an error corresponding to the illegal instruction is stored in the C-ROM 102.

### 20) ALU (Arithmetic and Logic Unit) ... 220

This combined logic circuit of 16-bit binary parallel connection performs the arithmetic and logic operations and includes a 1-bit decimal adding/subtracting circuit. The operation data from the R-BUS 227R is directly input to the ALU 220. The operation data from the T-BUS 227T is latched at the latch circuit (LATCH) and is thereafter input to the ALU 220. The operation result is output to the T-BUS 227T.

### 21) SHF (Shifter) ... 221

This hardware shifter performs left shift or right shift of 1 to 15 bits in 1 cycle. The four lower significant bits of the R-BUS 227R designate the number of shifts. The shift number designation from the R-BUS 227R is directly input to the SHR 221. The data from the T-BUS 227T is input to the SHF 221 through the latch circuit (LATCH). The shift result is output to the T-BUS 227T.

### 22) MUL (Multiplier) ... 222

This ia a high-speed multiplier of 16 x 16 bits to which is input the data from the T-BUS 227T and R-BUS 227R. The upper significant digit of the operation results, extended in its width, is supplied to the register MRH, and the lower significant digit thereof is supplied to the register MAL. The equivalents of the MRH and MRL are assembled within the MUL. The MRH and MRL are imaginary registers and do not physically exist.

### 23) DECODE & CONT (Decoder and Controller) ... 223

This decoder and controller decodes the microinstructions stored in the MIR 201 and obtains various control signals. Predetermined signals other than the output of the MIR 201 are input to this, and are decoded or obtained as control signals.

### 24) XSGN (External Signal Register) ... 224: 12 bits

This register stores a group of external signal (12 bits) of TEST 1 which are input through the C-BUS 103 together with the microinstruction read out from the C-ROM 102. The content of the XSGN 224 is supplied to the DECODE & CONT 223.

### 25) MODE (Mode Register) ... 225: 12 bits

This register stores a group of external signals (12 bits) input through the C-BUS 103 during the initial control operation in the microprogram read cycle. The content of the MODE 225 is supplied to the DECODE & CONT 223.

### 26) MER (Memory Control Register) ... 226: 8 bits

This register stores the memory control information (8 kinds) supplied from the DECODE & CONT 223. The content of the MER 226 is supplied to the outside through the C-BUS 103 simultaneously with the contents of the MAR 206 and the SGA 207, (or the SGB 207₂).

### 27) T-BUS, R-BUS (Transfer Bus, Receiver Bus) ... 227T, 227R

The T-BUS 227T is an internal bus capable of duplex data transfer, and the R-BUS 227R is an internal bus capable of simplex data transfer. They both have 16-bitwidths and are used mainly for data transfer between the registers inside the 1-chip CPU 101.

The external input/output signals of the respective pins, other than through the C-BUS 103 (32 bits) of the 1-chip CPU 101 and the ROM address line RAL (12 bits), include the following:

### 1) ROE (ROM Output Enable)

This is a timing signal for taking in the microinstruction read out from the C-ROM 102 through the C-BUS 103. This signal is also used as the gate control signal for separating the C-BUS 103 into the inside and the outside, and as a timing signal for taking the group of external signals (TEST 0 or TEST 1) through the C-BUS 103.

### 2) PSEL (Processor Select)

This signal indicates that the 1-chip CPU 101 occupies the memory bus.

### 3) MA (Memory Address)

This signal indicates that the signal on the C-BUS 103 is the memory address of the main ROM. By this signal, it is possible to latch the memory address in the latch circuit (LATCH).

### 4) SYCNT (System Control)

This is a timing signal for latching (or releasing) the control signal in the externally attached addressable latch circuit 104₁.

### 5) IOCNT (I/O Control)

This is a timing signal for latching (or releasing) the control signal in the externally attached addressable latch circuit 104₂.

### 6) CNTD (Control Data)

This signal is for setting/resetting the addressable latch circuits 104₁ and 104₂. When this signal is of level "1", the flip-flop selected by the decoded value of signals SELO to SEL2, from among the flip-flops 0 to 7 inside the latch circuits 104, and 104₂, is set at the timing of the corresponding CNT signal (SYCNT or IOCNT). The flip-flop is reset when this signal is at level "0".

### 7) SELO, SEL1, SEL2 (Select)

These are 3-bit selection signals used as the selection signals of the flip-flop (eight for each) of the addressable latch circuits 104, and 104₂, or as the decoder input signals.

### 8) SYN (Synchronous)

This is a response signal from an 1/0 (input/ output device) according to which the presence of the remote device (I/O) may be confirmed.

### 9) REQ (Request)

This signal is output when the DMA side requires the memory cycle.

### 10) EN (Enable)

This is an enable signal which is supplied to the DMA side when the REQ signal from the DMA side is received.

### 11) BBSY (Bus Busy)

This is one of the memory control signals, and is used as a starting/terminating signal for the main ROM.

### 12) MAEN (Memory Access End)

This signal is output when the main ROM has completed storing the data on the memory bus.

### 13) ERR (Error)

This is an error detection signal and is input when a PE (parity error), a PRTE (protect error), a PBE (conversion table non-defined error) or the like is generated.

### 14) SCLR (System Clear)

This is a signal for initializing a predetermined internal register or the like.

### 15) STB (Strobe)

This is a memory strobe signal. The memory control signals are output and controlled with this timing signal.

### 16) EBCLK (Basic Clock)

This is a basic clock pulse supplied from the clock pulse generator 106. The internal clock pulses are generated based on this clock pulse at the DECODE & CONT circuit 223.

### 17) VDD, GND

This is an operating DC power source input from an external power source device (VDD = +5 V, GND = 0 V).

The construction and operation of the structure externally attached to the 1-chip CPU 101 of the above construction will be described next. Of the addressable latch circuits 104, and 104₂ externally attached to the 1-chip CPU 101, the addressable latch circuit 104, mainly outputs eight kinds of external control signals (EXA) the console, based on the respective signals of CNTD, SYCNT, and SELO to SEL2. The other addressable latch circuit 104₂ mainly outputs eight kinds of external control signals (EXB) for I/Os, based on the respective signals of CNTD IOCNT, SELO to SEL2 and so on. The TEST signal output from the addressable latch circuit 104, is the signal for designating the group of external signals of TEST 0 or TEST 1 taken in the 1-chip CPU 101 through the C-BUS 103 simultaneously with the microinstruction (20 bits) output from the C-ROM 102. When this signal is at logic "1" , the TEST 1 is selected. When this signal is at logic "0", the TEST 0 is selected. When the TEST signal is at logic "1", the output of an inverter INV1, for inverting the ROE signal having the significant level of logic "0", becomes logic "1". Accordingly, the signal of logic "1" for opening the gate circuit G3 is output from the AND gate A1. As a result, the group of external signals (12 bits) of TEST 1 are taken in the 1-chip CPU 101 through the C-BUS 103 together with the microinstruction (20 bits) read out from the C-ROM 102. When the TEST signal is at logic "0", the signal of logic "1" for opening the gate circuit G2 is output by the signal of logic "1" of an inverter INV2 for inverting this signal and the logic "1" signal of the inverter INV1. The group of external signals (12 bits) of TEST 0 are similarly taken in the 1-chip CPU 101 through the C-BUS 103. The TEST 0 signal is at logic "0" during initializing, and is at logic "1" during normal control of the microprograms. Therefore, during the initializing, the group of external signals of TEST 0 are taken in the 1-chip CPU 101 in the microprogram read cycle. During the normal microprogram control, the group of external signals of TEST 1 are taken in the 1-chip CPU 101 in the microprogram read cycle. The group of external signals of TEST 1 taken in the 1-chip CPU 101 are stored in the XSGN register 224, and the group of external signals of TEST 0 are stored in the MODE register 225. An external setting signal ERM is included in the group of external signals of TEST 0. This ERM signal is the external setting signal for selecting whether the instruction system of the unit is to be effective or ineffective. Since the B-ROM 219 as the OP code auxiliary table of the C-ROM 102 is disposed inside the 1- chip CPU 101 in advance, the setting when performed according to the rules described above may no longer be changed. However, a user may desire to use the unit with an instruction system which is different from the original instruction system of the unit, by freely changing the corresponding setting between the microprogram and the OP code. The ERM signal is used in response to this requirement. When ERM signal is at logic "0", the setting of the B-ROM 219 becomes effective. When ERM signal is at logic "1", the setting becomes ineffective. The operation will be described in more detail hereinafter.

The external input signals of I 8/16, ATN, PPF, and so on are included in the group of external signals of TEST 1 stored in the XSGN register 224. Among these signals, the I 8/16 signal is the bus width setting signal from the I/O device for performing data transfer with the 1-chip CPU 101. The logic "1" (H) of the I 8/16 signal indicates that the 16-bit width is selected for data transfer. The logic "0" (L) of the I 8/16 signal indicates that the 8-bit width is selected for data transfer. The I 8/16 signal supplied from the I/O device is temporarily latched in the externally attached flip-flop 108 in synchronization with the SYN signal described above, and is thereafter taken in for judgement in the XSGN register 224 inside the 1-chip CPU 101 at the next program read timing. The ATN signal is the interruption signal from the I/0 device connected to the Il0-BUS 107. When a plurality of 110 devices are connected to the 1/O-BUS 107, it is wired "OR" and is supplied to the predetermined pin (ATN) of the TEST 1. The ATN signal output from this I/O device is cleared when an ACK signal (to be described hereinafter) supplied from the 1- chip CPU 101 side is received by the I/0 which requested the interruption. The PPF signal included in the TEST 1 is for signaling abnormalities in the power source from the external devices including the I/Os.

The external control signals (EXB) for the I/Os, output from the addressable latch circuit 104₂, include the following:

### 1) IN (I/0 Data Input)

This is a control signal for outputting data on the I/O-BUS 107 to the C-BUS 103.

### 2) OUT (Destination I/O

This is a control signal for outputting data on the C-BUS 103 to the I/O-BUS 107.

### 3) ADRS (Address)

This is a control signal for signaling that the data on the I/O-BUS 107 is an I/O address.

### 4) CMD (Command)

This is a control signal for signaling that the data on the I/O-BUS 107 is an I/O command.

### 5) DA (Data Available)

This is a control signal for signaling that the data on the I/0-BUS 107 is the transfer data to the 1/0.

### 6) DR (Data Request)

This is a control signal for requesting that the data be placed on the I/O-BUS 107 by the 1/0.

### 7) SR (Status Request)

This is a signal for requesting that the status be placed on the I/O-BUS 107 by the I/O.

### 8) ACK (Acknowledge)

This is a response signal output when an interruption request from the 1/0 is received.

The above-mentioned eight kinds of external control signal (EXB) for the I/Os are output by the addressable latch circuit 104₂ with the timing of the IOCNT signal. These control signals required for controlling the I/Os are supplied to the respective I/0 devices through the control line. Reference numeral 109 denotes an address latch circuit (A-LATCH) of 24-bit configuration for latching, based on the MA signal output from the 1- chip CPU 101, the logical address of 16 bits stored in the MAR register 206 and the segment information of 8 bits stored in the SGA register 207, (or the SGB register 207₂), both supplied from the 1- chip CPU 101 through the C-BUS 103. Reference numeral 110 denotes a selector for switching the indexing information of the conversion table 105T, depending on the main ROM accessing time at the CPU side and the main ROM accessing time at the DMA side. This selector selects the address information supplied from the addressable latch circuit 107 when the 1-chip CPU 101 accesses the main ROM, and selects the address information supplied from the DMA unit when the DMA unit accesses the main ROM. Reference numeral 111 denotes a memory control signal latch circuit (to be referred to as an MCS latch circuit hereinafter) for latching, at the latching timing of the address latch circuit 107 based on the MA signal output from the 1-chip CPU 101, the contents (24 bits total) of the MAR register 206 and the SGA register 207, (or the SGB register 207₂) supplied from the 1-chip CPU 101 through the C-BUS 103, simultaneously with the eight kinds of memory control information (8 bits) supplied from the MER register 226 inside the 1- chip CPU 101. Reference numeral 112 denotes a protection table (PT) constituting the memory protective mechanism G8 denotes a gate circuit for reading/writing the protection information in the protection table 112 through the C-BUS 103; and 113 denotes a parity circuit for generating a parity bit for the memory data and for parity checking.

Fig. 3 shows in simplified form the connections between the 1-chip CPU 101 and a plurality of kinds of 1/0 devices, wherein reference numerals 301 and 302 denote input/output interface parts (l/ O-INF) of the respective I/0... devices, and L1 to L10 denote input/output control lines. The respective I/O control signals such as ADRS, CMD, DA, DR, SR, ACK and so on are output from the addressable latch circuit 104₂ externally attached to the 1-chip CPU 101 as described above. Among them, the ACK signal (a response signal when an interruption signal is received) is supplied to the input/output interface parts 301 and 302 of the respective I/O devices by the daisy chain system. The transfer data from the respective I/O devices is transferred to the 1-chip CPU 101 through all of the I/O-BUSes 107 of 16-bit width, or through the lower significant 8 bits. The 18/16 signal (at logic "1" when the transfer width is 16 bits) of each I/O devices for signaling the I/O data transfer width is wired "OR" and is output to one control line L1. Then it is latched in the flip-flop 108 in synchronism with the SYN signal, it is taken in the 1-chip CPU 101 in the next microprogram read cycle.

Figs. 4A through 4E show the input/output control timings of the respective I/O devices. Fig. 4A shows the output timing chart of the DA signal and the ADRS signal. Fig. 4B shows the input timing chart of the SYN signal as a response signal from the external devices including the 1/0 devices. Fig. 4C shows the output timing chart of the DATA-OUT signal for outputting the data on the C-BUS 103 to the I/O-BUS 107. Fig. 4D shows the output timing of the DATA-IN signal for outputting the data on the l/ O-BUS to the C-BUS . Fig. 4E shows the input timing of the bus width setting signal I 8/16 for data transfer from the 1/0 devices.

The operation of the C-BUS 103 will now be described. Through the C-BUS 103 of 32-bit width pass time-divisionally, as has already been described, the output data of the C-ROM 102, that is, the microinstructions, the memory addresses of the main ROM, the memory data, the 1/0 data and so on.

Except during the transfer of the data, the C-BUS 103 is time-divisionally used at a predetermined time width (e.g., 200 ns) in the order of the memory address, the microinstruction, the memory data, the microinstruction, and the memory address. In the read cycle of the microinstruction, the gate circuit G1 is opened by an ROE signal which is output from the 1-chip CPU 101. Then, the microinstruction (20 bits), read out from the C-ROM 102 by the designation of the microinstruction address or the OP code of the user instruction by the RAR register 216, is output on the C-BUS 103 through the gate circuit G1 and is received by the 1-chip CPU 101 through the C-BUS 103. During the transfer of the microinstructions, the group of external signals of TEST 0 or TEST 1 are taken in the 1-chip CPU 101 through the C-BUS 103 simultaneously. During the system initialization, the group of external signals of TEST 0 are selected since the TEST signal output from the addressable latch circuit is at logic "0" and gate circuit G2 is conducted. The selected signals are taken into the 1 chip CPU 101 with the microinstruction from the C-ROM 102 through the C-BUS 103. During the normal processing operation, the group of external signals of TEST 1 are selected since the TEST signal output is at logic "1" and gate circuit G3 is conducted. These groups of external signals are then taken in the 1-chip CPU 101 through the C-BUS 103 with the microinstruction from the C-ROM 102. In this case, the upper significant 12 bits of the C-BUS 103 are supplied for the transfer of the group of external signals of TEST 0 or TEST 1, and the remaining 20 bits are supplied for the transfer of the microinstruction. The microinstruction taken in the 1-chip CPU 101 through the C-BUS 103 is stored in the MIR register 201. The group of external signals of TEST 0 are stored in the MODE register 205, and the group of external signals of TEST 1 are stored in the XSGN register 204.

When the ROE signal is output, the gate circuit G4 at the intermediate position on the C-BUS 103 is closed, and the C-BUS 103 is separated into a bus at the side of the CPU and a bus at the side of the DMA. Thus, when the ROE signal is output, the C-BUS 103 is used as separated into the bus for internal processing between the 1-chip CPU 101 and the gate circuit G4, and the other bus for controlling the DMA. In the transfer of the memory address during the main memory access of the 1-chip CPU 101, on the C-BUS 103 are simultaneously output the memory address information of 24 bits total, consisting of the main memory logic address of 16 bits stored in the MAR register 206 of the 1-chip CPU 101 and the segment information of 8 bits for enlarging the logic address space stored in the SGA register 207, (or SGB register 207₂); and the memory control information of 8 bits (eight kinds) stored in the MER register 226. During the transfer of the memory address, the ROE signal is not output but the MA signal is output. Therefore, the memory address (logic address) information of 24 bits is latched in the address latch circuit (A- LATCH) 107 through the C-BUS 103 and the gate circuit G4, and the memory control information of 8 bits is latched in the MCS latch circuit 109.

Part of the memory address information stored in the address latch circuit 107 is supplied to the address conversion table 105T through the selector 108. The physical address for the main memory access, consisting of the output information by the table indexing and the address information stored in the address latch circuit 107, is supplied to the main memory through the memory address line MAL. At the side of the main memory, an instruction word, an operand data or the like is read out from the memory address which is accessed by the physical address information supplied through the memory address line MAL and the control signal from the 1-chip CPU 101 and which is designated by the 1-chip CPU 101. The data read out from the main memory is output on the C-BUS 103 through the memory data line MDL and the gate circuits G5 and G4 in the transfer cycle of the memory data following the read cycle of the microinstruction, and is received by the 1-chip CPU 101. When the received data is an instruction word, it is stored in the 180 to IB3 203. When it is the operand data, it is stored in the MDRH register 204, the MDRL register and so on.

An external setting signal EXMEND is included in the group of external signals of TEST 0 stored in the MODE register 225. This EXMEND signal is an external setting signal for instructing whether or not to generate a time-out error when the MAEN signal, indicating the completion of the access, is not returned from the main memory within a certain period of time after the main memory is started during access of the main memory of the 1-chip CPU 101. It is, in other words, a selection signal for selecting whether or not to make the time-out function effective. When EXMEND = 0, a time-out error is generated when the MAEN signal is not returned within 10 us. When EXMEND = 1, the MAEN signal is waited for until it is returned, and the time-outdoes not occur.

When the EXMEND signal is logic "0" among the group of external signals of TEST 0 stored in the MODE register 225 of the 1 -chip CPU 101, the 1- chip CPU 101 renders the time-out function during the main memory access effective in the microprogram control to follow. Thus, a time-out error is generated only when the MAEN signal is not returned from the main memory within a certain period of time (10 us) after the main memory is started, and thereafter the next microinstruction is processed. The main memory performs address control when the EXMEND signal is set at logic "0". When the 1-chip CPU 101 accesses the main memory, a memory access request is output by the BBSY signal. In response to this BBSY signal, the main memory is started and returns the SYN signal to the 1-chip CPU 101. When reading operation is taken as an example, the main memory then outputs the read out data on the memory data line MDL of the memory bus. Thereafter, the main memory outputs the MAEN signal to notice the 1-chip CPU 101 that the memory access is completed, and the data is output on the memory data line MDL. When the MAEN signal is received within the limit time (10 us), the 1-chip CPU 101 fetches the read out data through the memory data line MDL, the gate circuit G7, the C-BUS 103, the gate circuit G4, and the C-BUS 103, and stores the upper significant 16 bits in the MDRH register 204 and the lower significant 16 bits in the MDRL register 205. Thereafter, the 1- chip CPU 103 stops outputting the BBSY signal (placed under the FALSE condition) as well as outputting the memory address. The main memory also stops outputting the MAEN signal. The memory access control operation when the system is conducted has been described. In the memory access when the EXMEND signal is logic "0" and when the data and hence the MAEN signal cannot be outputwithin a certain period of time (10 us) after the main memory has received the BBSY signal due to some accident at the side of the main memory, the 1-chip CPU 101 judges that there has been some memory abnormality since the MAEN signal is not returned within a certain period of time (10 us) after the main memory is started. Thus, the 1-chip CPU 101 generates a time-out error inside and continues to the next microstep.

When the EXMEND signal is at logic "1" among the group of external signals of TEST 0 stored in the mode register 226 of the 1-chip CPU 101, the 1- chip CPU 101 makes the time-out function for the main memory access during the microprogram control to follow. Thus, the 1-chip CPU 101 does not generate a time-out error, even after the certain period of time (10 us) has elapsed after the main memory is started, and waits until the MAEN signal is returned from the main memory. The time-out function during the memory access may be easily cancelled by setting the EXMEND signal of TEST 0 at logic "1" in advance. Accordingly, the function construction for a particular purpose may be easily set, for when the time-out is not desired until the user has taken some measure, for when the MAEN signal need to be returned afterthe limit time (10 µs) has elapsed (e.g., when accessing the shared memory by the multi-processor), or for when the memory elements of very slow operation speed are used. The signal (EXMEND) for designating the effective/non-effective status of the time-out function may be received by the 1- chip CPU 101 without requiring a particular pin for this purpose for the 1-chip CPU 101; thus, the limited number of external connection pins may be effectively used.

During the transfer of the 1/O data, the 1/0-BUS 107 of 16-bit width is connected to the lower significant 16 bits of the C-BUS 103 through the gate circuit G7, and the device addresses, commands, input/output data (1/O data) and so on are selectively transferred. The transfer of various data between the 1-chip CPU 101 and the respective 1/0 devices through the C-BUS 103 and the I/O-BUS 107 is started when the interruption request from the 1/0 device is received by the 1- chipCPU 101 and its response signal is supplied by the 1-chip CPU 101 to the 1/0 device. The interrupt request from the 1/0 device is input to the external signal group as an ATN signal. The ATN signal is taken in the 1-chip CPU 101 through the C-BUS 103 together with the microinstruction to notice it to the 1-chip CPU 101, as has been described. The response signal from the 1-chip CPU 101 responding to this interrupt request is output to the I/0 device as an ACK signal from the addressable latch circuit 104₂. The ATN signal from the 1/0 device, which indicates the interruption request from the I/ 0 device, is supplied to the predetermined pin (ATN) of TEST 1 through the I/O control line L7. This ATN signal is taken in the 1-chip CPU 101 at the input timing of the microinstruction together with the other external signals of TEST 1, and is stored in the XSGN register 224. Then, the 1-chip CPU 101 recognizes the interrupt request from the I/O device. After the 1-chip CPU 101 receives the interrupt request and identifies the device involved, it outputs to the I/O device the ACK signal indicating that it has accepted the interrupt by the externally attached addressable latch circuit 104₂. For outputting a command from the 1-chip CPU 101 to the I/O device, the CMD signal output from the addressable latch circuit 104₂ is placed under the available (e.g., logic "1") status. For outputting a device address from the 1-chip CPU 101 to the I/0 device, the ADRS signal is placed at logic "1". For requesting from the 1/0 device to the 1-chip CPU 101 to supply a status signal, the SR is placed at logic "1". The DR signal is placed at logic "1" for requesting the input data from the t/0 device. The DA signal is placed at logic "1" for requesting the output data from the 1-chip CPU 101. The transfer of various data between the 1-chip CPU 101 and the 1/0 devices is performed in this manner.

When the data transmission widths vary among the various types of 1/0 devices connected to the 1/0-BUS 107, that is, an information processing system is constructed with the various types of I/O devices in which some I/O devices have a data transfer width of 8 bits while other 1/0 devices have a data transfer width of 16 bits, the 1-chip CPU 101 must be able to recognize whether the transfer data on the I/O-BUS 107 is an 8-bit unit or a 16-bit unit. Especially in the case of input data, the 1-chip CPU must be signaled from the outside as to the transfer width of the data. The 1/0 for performing the data transfer with the 1-chip CPU 101 through the I/0-BUS 107 outputs, before the actual data transfer, an 18/16 signal for signaling its data transfer width at a predetermined time (e.g., when the interrupt request is generated). The 1/0 device outputs the 1 8/16 signal of logic "0" when the data transfer width of the device is 8 bits, and the 1 8/16 signal of logic "1" when the data transfer width is 16 bits. This I 8/16 signal is supplied to the 1-chip CPU 101 side through the 1/0 control line L1. After this I 8/16 signal is temporarily latched in the flip-flop 108 in synchronization with the SYN signal, it is taken in the 1-chip CPU 101 through the C-BUS 103 together with the other external signals of TEST 1 in the next microinstruction read cycle. Thus, the 1-chip CPU 101 is capable of judging the effective bit width of the 1/0 data input through the I/O-BUS 107 and the C-BUS 103, and of processing the input I/O data with the correct bit width based on the content of the I 8/16 signal.

By such a judging measure of the 1/0 data transfer width by the I 8/16 signal, the 1-chip CPU 101 is capable of processing the I/O data consistently wth the correct data transfer width, even when the external 1/0 devices include those of 8- bit data transfer width and those of 16-bit data transfer width. Furthermore, since the I 8/16 signal is taken in the 1-chip CPU 101 through the C-BUS 103, as the external signals of the TEST 1, a special pin for inputting the 1/0 data transfer width information need not be attached to the 1- chip CPU 101. Thus, a limited number of external connection pins may be effectively used.

A description will now be made with respect to an arithmetic control unit which is capable of adopting any desired instruction system other than the original instruction system of the unit, while performing decoding of the user instruction and fetching of the microinstruction at the same time and keeping the logic elements inside the chip fixed.

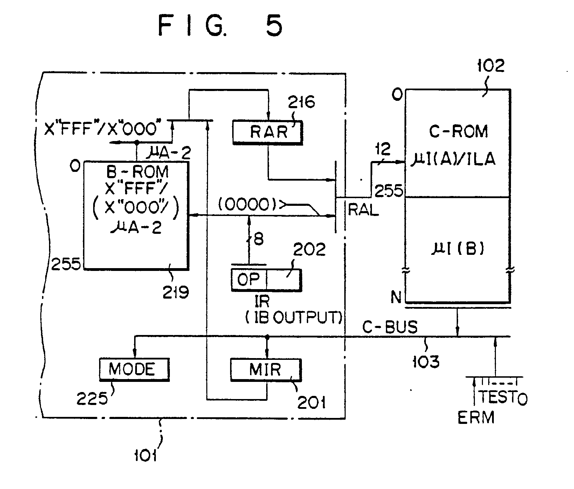

Fig. 5 is a partial view of the elements shown in Figs. 2A and 2B, wherein the same reference numerals denote the same parts. The description of these same parts will be omitted. Judgement information corresponding to the OP codes of user instructions according to the rules to be described below are each stored in the addresses 0 to 255 of the B-ROM 219. When the translation of the OP codes can be completed with one microinstruction, 12-bit information of all "1"s (X "FFF") is stored in the B-ROM 219. In the case of the OP codes of an illegal instruction, 12-bit information of all "0"s (X "000") is stored in the B-ROM 219. When the OP code requires two microsteps or more, the microaddresses µA^{_}2 of the C-ROM 102, which is the location of the second microinstruction step, is stored in the B-ROM 219. In the OP code corresponding addresses (0 to 255) of the C-ROM 102 externally attached to the 1-chip CPU 101 are stored the microinstructions µl(A) of the first step, the starting addresses (ILA) of the illegal instruction processing, or the like. In the other addresses are stored the microinstruction µl(B) after the second step and the like. When the ERM signal is at logic "0", the setting of the B-ROM 219 becomes effective. Then, the C-ROM 102 is address-designated and the B-ROM 219 is address-designated by the OP code of the user instruction read out from the IBO to IB3 register 203 and stored in the IR register 202. Then, the first microinstruction is read out from the C-ROM 102, and the identifying information (All "O"s/All "1"s/µA-₂ corresponding to this OP code is read out from the B-ROM 219. In the case of the illegal instruction, the branch address representing the head address of the illegal instruction processing is output from the C-ROM 102, and the identifying information of All "0"s is output from the B-ROM 219, indicating that the instruction is an illegal instruction. If the identifying information of All "0"s is output from the B-ROM 219, the information (branch address) output from the C-ROM 102 is temporarily stored in the MIR register 201 by the control operation. This information is also simultaneously stored in the RAR register 216. Thereafter, the no-operation code (All "0"s) is written in the MIR register 201. (The content of the MIR register 201 is cleared.) In the case of an OP code which requires two or more microinstruction steps, the microinstruction address of the second word is output from the B-ROM 219 and is stored in the RAR register 216. When the translation of the OP code may be completed with one microinstruction, the identifying information of All "1"s is output from the B-ROM 219. When the ERM signal is logic "1", setting of the B-ROM 219 becomes ineffective (the output is all "0"s), the output of the C-ROM 102 is inputto the RAR 216 through the MIR 201, and the no-operation code (All "0"s) is written in the MIR 201. Thus, the same operation as in the case of the illegal instruction is performed.

The operation of the C-ROM 102 and B-ROM 219 will be described. During the initial setting, that is, the initialization, the group of external signals of TEST 0 are taken in the MODE register 225 of the 1-chip CPU 101 through the C-BUS 103 in the microprogram read cycle.

When the ERM signal is at logic "0" among the external signals of TEST 0 stored in the MODE register 225 of the 1-chip CPU 101, setting of the B-ROM 219 disposed inside the 1-chip CPU 101 becomes effective, so that the processing operation may be executed with the original instruction system of the unit.

The C-ROM 102 and the B-ROM 219 are address-designated by the OP code of the user instruction read out from the IBO to IB3 register 203 and stored in the IR Register 202. Then, the first microinstruction is read out from the C-ROM 102, and the identifying information (All "0"s/All "1"s/pA_₂) corresponding to this OP code is output from the B-ROM 219. When the user instruction to be executed is an illegal instruction, the address designation by its OP code causes the identifying information of.AII "0"s, indicating that the instruction is an illegal instruction, to be output from the B-ROM 219. Thus, the microinstruction read out from the C-ROM 102 (it is the branch address of the illegal instruction processing) is stored in the MIR register 201 as well as in the RAR register 216, and the content of the MIR register 201 is rewritten as the no-operation code (All "0"s). The data stored in the C-ROM 102 is read out based on the information in the branch address stored in the RAR register 216, and enters the illegal instruction processing routine. When the OP code of the user instruction to be executed requires two or more microinstruction steps, the first microinstruction read out from the C-ROM 102 by the address designation of its OP code is stored in the MIR register 201 and executed. The C-ROM 102 is accessed by address stored in the RAR register 216 and the second microinstruction read out from the B-ROM 219 by the address designation of its OP code is stored in the RAR register 216. Thereafter, a jump is made to the microprogram storing address for the microinstructions after the second microinstruction.

When the ERM signal of TEST 0 stored in the MODE register 225 is at logic "1", the setting of the B-ROM 219 inside the 1-chip CPU 101 becomes ineffective, and the processing is performed under an instruction system different from the original instruction system of the unit. In this case, the setting of the B-ROM 219 becomes all ineffective (the output is always all "1"s). The output read out from the C-ROM 102 is supplied to the RAR register 216 through the MIR register 201, and the content of the MIR register 201 is thereafter rewritten as the no-operation code (All "0"s). Thus, the operation mode becomes the same as in the case of the illegal instruction. An instruction system different from the original instruction system of the unit stored in the B-ROM 219 may be established. In this manner, an instruction system which is entirely different from the original instruction system may be arbitrarily established for processing while keeping the internal logics of the 1-chip CPU 101, by simply setting the ERM signal of TEST 0 at logic "1" or "0" from the outside. Since the ERM signal is taken in the 1-chip CPU 101 through the C-BUS 103, an external connection pin for the ERM signal alone need not be incorporated, so that the limited number of external connection pins of the 1-chip CPU 101 may be effectively utilized.

Referring again to figure 2B, reference numeral 125 denotes a memory address line (MAL) connected to the C-BUS 103 through the gate circuit G1; and 126 denotes a memory data line (MDL) connected to the C-BUS 103 through the gate circuit G2.

## Claims

1. An information processing system comprising:
an arithmetic control unit (101) fabricated on one chip,
a control memory (102) external to said arithmetic control unit (101) in which can be stored a plurality of microprograms each comprising a plurality of microinstructions for controlling said arithmetic control unit (101),
a common bus (103) coupled to said arithmetic control unit (101),
a memory bus (MAL, MDL) external to said arithmetic control unit adapted to be coupled to a main memory external to said arithmetic control unit;
an input/output bus (107) external to said arithmetic control unit (101) adapted to be coupled to at least one input/output device;
said common bus (103) being coupled to said control memory (102), said memory bus and said input/output bus (107) for transferring information between the arithmetic control unit (101) and the control memory (102), between the arithmetic control unit (101) and the memory bus and between the arithmetic control unit (101) and the input/output bus (107);
first gate means (G4) for separating said common bus (103) exteriorly of said arithmetic control unit (101) into a first bus portion to which are coupled said arithmetic control unit (101) and said control memory (102) and a second bus portion to which are coupled said memory bus and said input/output bus (107);
said arithmetic control unit (101) including first means for causing said first gate means (G4) to selectively either couple said first and second bus portions or to separate said common bus (103) into said first and second bus portions, said first means causing said first gate means (G4) to separate said common bus (103) into said first and second bus portions when microinstructions are to be read from said control memory (102) to said arithmetic control unit (101), and further said arithmetic control unit (101) being coupled to said control memory (102) and microinstructions being read out of said control memory (102) onto said first bus portion of said common bus (103) when said first gate means (G4) is caused to separate said common bus (103) into said first and second bus portions,
characterized in that
said first means is connected to second gate means (G1) provided between said control memory (102) and said common bus (103) and to third gate means (G2, G3) connected to the first portion of the common bus for taking in external signals including a bus width setting signal from the input/output device for performing data transfer with the arithmetic control unit (101) through the common bus (103) so that an output enable signal (ROE) applied by said first means is used as a timing signal for taking in microinstructions read out from the control memory (102) through the second gate means (G1), as a gate control signal for separating the common bus (103) in the first and second bus portions by means of the first gate means (G4) and as a timing signal for taking in the external signals through the third gate means (G2, G3).

2. An information processing system according to claim 1, characterized by fourth gate means (G5, G6, G7) for connecting said memory bus (MAL, MDL), said input/output bus (107) and said common bus (103), and for performing data transfer between said arithmetic control unit (101) and said external devices when microinstructions are not read out from said control memory (102).

3. An information processing system according to claim 1 or 2, characterized in that said common bus (103) has a data width of N bits and said control memory (102) includes second means responsive to microinstruction addresses for outputting microinstructions M bits wide to said first bus portion of said common bus (103), where M<N.

4. An information processing system according to claim 3, characterized in that said third gate means (G2, G3) selectively couple an external signal K bits wide to said first bus portion of said common bus (103), where N = M + K.

5. An information processing system according to any one of claims 1 to 4, characterized in that said first means supplies a signal to said third gate means (G2, G3) in response to which said third gate means (G2, G3) couples said external signal to said first bus portion when a microinstruction is being read to said first bus portion from said control memory (102) so that said external signal and said microinstruction are simultaneously input to said arithmetic control unit (101) on said first bus portion.

6. An information processing system according to any one of claims 1 to 5, characterized in that said third gate means (G2, G3) is comprised of a first gate member (G2) for selectively coupling a first external signal K bits wide to said first bus portion and a second gate member (G3) for selectively coupling a second external signal K bits wide to said first bus portion, said first means is coupled to each of said first and second gate members (G2, G3) for selectively supplying said output enable signal (ROE) to at least one of said first and second gate members (G2, G3) in response to which the third gate means receiving said signal couples a respective external signal to said first bus portion so that the respective external signal and a microinstruction are simultaneously input to said arithmetic control unit (101) on said first bus portion.

7. An information processing system according to claim 6, characterized in that said first means supplies said signal to cause said first gate member (G2) to be coupled to said first bus portion only during an initialization of said information processing system.

8. An information processing system according to any one of claims 1 to 7, characterized in that said input/output bus (107) has a date width of 2L bits and is adapted to be coupled to an input/ output device capable of transferring data L bits wide and to another input/output device capable of transferring data 2L bits wide.

9. An information processing system according to any one of claims 1 to 8, characterized in that said main memory is operated synchronously with said arithmetic control unit (101).

10. An information processing system according to claim 2 or 9, characterized in that said fourth gate means (G5, G6, G7) selectively couple said memory bus (MAL, MDL) and said second bus portion when said first and second bus portions are caused to be coupled by said first gate means (G4) and said main memory is accessed by said arithmetic control unit (101), and further couple said main memory to said arithmetic control unit (101) for supplying a signal to said arithmetic control unit (101) which indicates completion of a main memory access by said arithmetic control unit (101), said arithmetic control unit (101) commencing a next operation only upon receipt of said access completion indicating signal.

11. An information processing system according to claim 2 or 9, characterized in that said fourth gate means (G5, G6, G7) selectively couple said memory bus (MAL, MDL) and said second bus portion when said first and second bus portions are caused to be coupled by said first gate means (G4) and said main memory is accessed by said arithmetic control unit (101), and further means couple said main memory to said arithmetic control unit (101) for supplying a signal to said arithmetic control unit (101) which indicates completion of a main memory access by said arithmetic control unit (101), said arithmetic control unit (101) determining whether said access completion. indicating signals output by said main memory within a predetermined time after access of said main memory is commenced and causing said information processing system to generate an error signal if said access completion indicating signal is not output within said predetermined time and to continue processing.

12. An information processing system according to any one of claims 1 to 11, characterized in that said arithmetic control unit (101) includes means for, in dependence on at least one bit of said external signal,
(a) commencing a next operation only upon receipt of an access completion signal or
(b) determining whether said access of said main memory is commenced and causing said information processing system to generate an error signal if said access completion signal is not output within said predetermined time and to continue processing.

## Patentansprüche

1. lnformations- oder Datenverarbeitungssystem, umfassend eine auf einem Chip ausgebildete arithmetische Steuereinheit (101),
einen außerhalb der arithmetischen Steuereinheit (101) angeordneten Steuerspeicher (102), in welchem eine Anzahl von Mikroprogrammen mit jeweils einer Anzahl von Mikrobefehlen zur Ansteuerung der arithmetischen Steuereinheit (101) speicherbar sind,
eine an die arithmetische Steuereinheit (101) angeschlossene gemeinsame Sammelschiene (103),
eine außerhalb der arithmetischen Steuereinheit angeordnete Speichersammelschiene (MAL, MDL), die mit einem außerhalb der arithmetischen Steuereinheit angeordneten Hauptspeicher verbindbar ist,
eine außerhalb der arithmetischen Steuereinheit (101) angeordnete Eingangs/Ausgangs- oder Ein/Ausgabesammelschiene (107), die mit mindestens einer Ein/Ausgabevorrichtung verbindbar ist,
wobei die gemeinsame Sammelschiene (103) mit dem Steuerspeicher (102), der Speichersammelschiene und der Ein/Ausgabesammelschiene (107) verbunden ist für die Informationsübertragung oder -übermittlung zwischen der arithmetischen Steuereinheit (101) und dem Steuerspeicher (102), zwischen der arithmetischen Steuereinheit (101) und der Speichersammelschiene sowie zwischen der arithmetischen Steuereinheit (101) und der Ein/Ausgabesammelschiene (107),
eine erste Toreinheit (G4) zum Auftrennen der gemeinsamen Sammelschiene (103) außerhalb der arithmetischen Steuereinheit (101) in einen ersten Sammelschienen- oder Busabschnitt, an den die arithmetische Steuereinheit (101) und der Steuerspeicher (102) angeschlossen sind, und einen zweiten Sammelschienen- oder Busabschnitt, mit dem die Speichersammelschiene und die Ein/Ausgabesammelschiene (107) verbunden sind,
wobei die arithmetische Steuereinheit (101) eine erste Einrichtung aufweist, um die erste Toreinheit (G4) selektiv entweder die ersten und zweiten Busabschnitte koppeln oder die gemeinsame Sammelschiene (103) in ersten und zweiten Busabschnitt trennen zu lassen, wobei die erste Einrichtung die erste Toreinheit (G4) die gemeinsame Sammelschiene (103) in ersten und zweiten Busabschnitt trennen läßt, wenn Mikrobefehle aus dem Steuerspeicher (102) zur arithmetischen Steuereinheit (101) ausgelesen werden sollen, und weiterhin die arithmetische Steuereinheit (101) mit dem Steuerspeicher (102) verbunden ist und Mikrobefehle aus dem Steuerspeicher (102) auf dem ersten Busabschnitt der gemeinsamen Sammelschiene (103) ausgelesen werden, wenn die erste Toreinheit (G4) veranlaßt wird, die gemeinsame Sammelschiene (103) in die ersten und zweiten Busabschnitte zu trennen,
dadurch gekennzeichnet, daß die erste Einrichtung mit einer zwischen dem Steuerspeicher (102) und der gemeinsamen Sammelschiene (103) vorgesehenen zweiten Toreinheit (G1) sowie einer an den ersten Abschnitt der gemeinsamen Sammelschiene angeschlossenen dritten Toreinheit (G2, G3) verbunden ist zum Abnehmen von exter
nen Signalen, einschließlich eines Sammelschienen- oder Busbreiten-Einstellsignals, von der Ein/Ausgabevorrichtung für die Durchführung einer Datenübertragung mit der arithmetischen Steuereinheit (101) über die gemeinsame Sammelschiene (103), so daß ein durch die erste Einrichtung angelegtes Ausgabe- oder Ausgangs-Freigabesignal als Zeitsteuer- oder Schritttaktsignal zum Abnehmen von über die zweite Toreinheit (G1) aus dem Steuerspeicher (102) ausgelesenen Mikrobefehlen, als Torsteuersignal zum Trennen der gemeinsamen Sammelschiene (103) in den ersten und zweiten Busabschnitt mittels der ersten Toreinheit (G4) und als Zeitsteuer- oder Schrittaktsignal zum Abnehmen der externen Signale über die dritte Toreinheit (G2, G3) benutzt wird.

2. Datenverarbeitungssystem nach Anspruch 1, gekennzeichnet durch eine vierte Toreinheit (G5, G6, G7) zum Verbinden der Speichersammelschiene (MAL, MDL), der Ein/Ausgabesammelschiene (107) und der gemeinsamen Sammelschiene (103) und zur Durchführung einer Datenübertragung zwischen der arithmetischen Steuereinheit (101) und den externen Vorrichtungen, wenn aus dem Steuerspeicher (102) keine Mikrobefehle ausgelesen werden.

3. Datenverarbeitungssystem nach Anspruch 1 oder 2, dadurch gekennzeichnet, daß die gemeinsame Sammelschiene (103) eine Datenbreite von N Bits aufweist und der Steuerspeicher (102) eine auf Mikrobefehladressen ansprechende zweite Einrichtung zum Ausgeben von M Bits breiten Mikrobefehlen zum ersten Busabschnitt der gemeinsamen Sammelschiene (103) aufweist, wobei M < N.

4. Datenverarbeitungssystem nach Anspruch 3, dadurch gekennzeichnet, daß die dritte Toreinheit (G2, G3) selektiv ein K Bit breites externes Signal an den ersten Busabschnitt der gemeinsamen Sammelschiene (103) ankoppelt, wobei N = M + K.

5. Datenverarbeitungssystem nach einem der Ansprüche 1 bis 4, dadurch gekennzeichnet, daß die erste Einrichtung der dritten Toreinheit (G2, G3) ein Signal liefert, auf das hin die dritte Toreinheit (G2, G3) das externe Signal an den ersten Busabschnitt ankoppelt, wenn ein Mikrobefehl zum ersten Busabschnitt aus dem Steuerspeicher (102) ausgelesen wird, so daß das externe Signal und der Mikrobefehl gleichzeitig auf dem ersten Busabschnitt der arithmetischen Steuereinheit (101) eingegeben werden.

6. Datenverarbeitungssystem nach einem der Ansprüche 1 bis 5, dadurch gekennzeichnet, daß die dritte Toreinheit (G2, G3) aus einem ersten Torelement (G2) zum selektiven Ankoppeln eines K Bits breiten ersten externen Signals an den ersten Busabschnitt und einem zweiten Toreiement (G3) zum selektiven Ankoppeln eines K Bits breiten zweiten externen Signals an den ersten Busabschnitt besteht, die erste Einrichtung mit jedem der ersten und zweiten Torelemente (G2, G3) verbunden ist zwecks selektiver Lieferung des Ausgangs-Freigabesignals (ROE) zu mindestens einem der ersten und zweiten Torelemente (G2, G3), wobei in Abhängigkeit davon die das Signal empfangende dritte Toreinheit ein betreffendes externes Signal an den ersten Busabschnitt ankoppelt, so daß das betreffende externe Signal und ein Mikrobefehl gleichzeitig auf dem ersten Busabschnitt der arithmetischen Steuereinheit (101) eingegeben werden.

7. Datenverarbeitungssystem nach Anspruch 6, dadurch gekennzeichnet, daß die erste Einrichtung das Signal liefert, um das erste Torelement (G2) mit dem ersten Busabschnitt nur während einer Initialisierung des Datenverarbeitungssystems koppeln zu lassen.

8. Datenverarbeitungssystem nach einem der Ansprüche 1 bis 7, dadurch gekennzeichnet, daß die Ein/Ausgabesammelschiene (107) eine Datenbreite von 2L Bits aufweist und mit einer Ein/ Ausgabevorrichtung, die Daten einer Breite von L Bits zu übertragen vermag, und einer anderen Ein/Ausgabevorrichtung, die Daten einer Breite von 2L Bits zu übertragen vermag, verbindbar ist.

9. Datenverarbeitungssystem nach einem der Ansprüche 1 bis 8, dadurch gekennzeichnet, daß der Hauptspeicher synchron mit der arithmetischen Steuereinheit (101) betrieben wird.

10. Datenverarbeitungssystem nach Anspruch 2 oder 9, dadurch gekennzeichnet, daß die vierte Toreinheit (G5, G6, G7) selektiv die Speichersammelschiene (MAL, MDL) und den zweiten Busabschnitt koppelt, wenn erster und zweiter Busabschnitt durch die erste Toreinheit (G4) zum Koppeln oder Verbinden veranlaßt werden und durch die arithmetische Steuereinheit (101) ein Zugriff zum Hauptspeicher hergestellt wird oder ist, und weiterhin den Hauptspeicher mit der arithmetischen Steuereinheit (101) koppelt, um zur arithmetischen Steuereinheit (101) ein Signal zu liefern, welches den Abschluß eines Hauptspeicherzugriffs durch die arithmetische Steuereinheit (101) anzeigt, wobei die arithmetische Steuereinheit (101) eine nächste Operation nur bei Eingriff des Zugriffabschluß-Anzeigesignals aufnimmt.

11. Datenverarbeitungssystem nach Anspruch 2 oder 9, dadurch gekennzeichnet, daß die vierte Toreinheit (G5, G6, G7) selektiv die Speichersammelschiene (MAL, MDL) und den zweiten Busabschnitt koppelt, wenn erster und zweiter Busabschnitt durch die erste Toreinheit (G4) zum Koppeln oder Verbinden veranlaßt werden und durch die arithmetische Steuereinheit (101) ein Zugriff zum Hauptspeicher hergestellt wird, und eine weitere Einrichtung den Hauptspeicher mit der arithmetischen Steuereinheit (101) verbindet, um zur arithmetischen Steuereinheit (101) ein Signal zu liefern, das den Abschluß eines Hauptspeicherzugriffs durch die arithmetische Steuereinheit (101) anzeigt, wobei die arithmetische Steuereinheit (101) bestimmt, ob die Zugriffabschluß-Anzeigesignale vom Hauptspeicher innerhalb einer vorbestimmten Zeit nach Beginn des Zugriffs zum Hauptspeicher ausgegeben werden, und das Datenverarbeitungssystem ein Fehlersignal erzeugen, wenn das Zugriffabschluß-Anzeigesignal nicht innerhalb der vorbestimmten Zeit ausgegeben wird, und die Verarbeitung weiterführen läßt.

12. Datenverarbeitungssystem nach einem der Ansprüche 1 bis 11, dadurch gekennzeichnet, daß die arithmetische Steuereinheit (101) (eine) Einrichtung(en) aufweist, um in Abhängigkeit von mindestens einem Bit des externen Signals
(a) eine nächste Operation nur bei Empfang eines Zugriffabschlußsignals aufzunehmen oder
(b) zu bestimmen, ob der Zugriff zum Hauptspeicher aufgenommen worden ist, und das Datenverarbeitungssystem ein Fehlersignal erzeugen, wenn das Zugriffabschlußsignal nicht innerhalb der vorbestimmten Zeit ausgegeben wird, und die Verarbeitung fortführen zu lassen.

## Revendications

1. Système de traitement d'informations comprenant:
un module de commande arithmétique (101) fabriqué sur une seule puce,
une mémoire de commande (102) externe au module de commande arithmétique (101) dans laquelle peuvent être mémorisés une plúralité de microprogrammes, chacun comprenant une pluralité de microinstructions pour commander le module de commande arithmétique (101),
un bus commun (103) couplé au module de commande arithmétique (101);
un bus mémoire (MAL, MDL) externe au module de commande arithmétique adapté à être couplé à une mémoire principale externe au module de commande arithmétique;
un bus d'entrée/sortie (107) externe au module de commande arithmétique (101) adapté à être couplé à au moins un dispositif d'entrée/sortie;
le bus commun (103) étant couplé à la mémoire de commande (102), au bus mémoire et au bus d'entrée/sortie (107) pour transférer des informations entre le module de commande arithmétique (101) et la mémoire de commande (102), entre le module de commande arithmétique (101) et le bus mémoire, et entre le module de commande arithmétique (101) et le bus d'entrée/sortie (107);
des premiers moyens de porte (G4) pour séparer le bus commun (103), de façon extérieure au module de commande arithmétique (101), en une première partie de bus à laquelle sont couplés le module de commande arithmétique (101) et la mémoire de commande (102) et une seconde partie de bus à laquelle sont couplés le bus mémoire et le bus d'entrée/sortie (107);
le module de commande arithmétique (101) comprenant des premiers moyens pour amener sélectivement les premiers moyens de porte (G4) ou bien à coupler les première et seconde parties de bus ou bien à séparer le bus commun (103) en les première et seconde parties de bus, lesdits premiers moyens amenant les premiers moyens de porte (G4) à séparer le bus commun (103) en les première et seconde parties de bus quand des microinstructions doivent être lues à partir de la mémoire de commande (102) pour le module de commande arithmétique (101), et, en outre, le module de commande arithmétique (101) étant couplé à la mémoire de commande (102) et des microinstructions étant lues à partir de la mémoire de commande (102) sur la première partie de bus du bus commun (103) quand les premiers moyens de porte (G4) sont amenés à séparer le bus commun (103) en les première et seconde parties de bus,
caractérisé en ce que
les premiers moyens sont couplés à des seconds moyens de porte (G1 ) prévus entre la mémoire de commande (102) et le bus commun (103) et à des troisièmes moyens de porte (G2, G3) connectés à la première partie du bus commun pour prendre en charge des signaux externes comprenant un signal de réglage de largeur de bus à partir du dispositif d'entrée/sortie pour réaliser les transferts de données avec le module de commande arithmétique (101) par l'intermédiaire du bus commun (103) de sorte qu'un signal de validation de sortie (ROE) appliqué par les premiers moyens est utilisé en tant que signal de synchronisation pour prendre en charge des microinstructions lues à partir de la mémoire de commande (102) par l'intermédiaire des seconds moyens de porte (G1 ), en tant que signal de commande de porte pour séparer le bus commun (103) en les première et seconde parties de bus à l'aide des premiers moyens de porte (G4), et en tant que signal de synchronisation pour prendre, en charge les signaux externes par l'intermédiaire des troisièmes moyens de porte (G2, G3).

2. Système de traitement d'informations selon la revendication 1, caractérisé par des quatrièmes moyens de porte (G5, G6, G7) pour connecter le bus mémoire (MAL, MDL) au bus d'entrée/sortie (107) et au bus commun (103) et pour réaliser des transferts de données entre le module de commande arithmétique (101) et les dispositifs externes quand des microinstructions ne sont pas lues à partir de la mémoire de commande (102).

3. Système de traitement d'informations selon l'une des revendications 1 et 2, caractérisé en ce que le buscommun (103) a une largeur de données de N bits et la mémoire de commande (102) comprend des seconds moyens agissant en réponse à des adresses de microinstructions pour fournir des microinstructions d'une largeur de M bits à la première partie du bus commun (103), avec M < N.

4. Système de traitement d'informations selon la revendication 3, caractérisé en ce que les troisièmes moyens de porte (G2, G3) couplent de façon sélective un signal externe d'une largeur de K bits à la première partie de bus du bus commun (103), avec N = M + K.

5. Système de traitement d'informations selon l'une quelconque des revendications 1 à 4, caractérisé en ce que les premiers moyens fournissent un signal aux troisièmes moyens de porte (G2, G3) en réponse auquel les troisièmes moyens de porte (G2, G3) couplent le signal externe à la première partie de bus quand une microinstruction est en cours de lecture vers la première partie de bus à partir de la mémoire de commande (102) de sorte que le signal externe et les microinstructions sont introduits simultanément dans le module de commande arithmétique (101) sur la première partie de bus.

6. Système de traitement d'informations selon l'une quelconque des revendications 1 à 5, çarac- térisé en ce que les troisièmes moyens de porte (G2, G3) sont constitués d'un premier élément de porte (G2) pour coupler sélectivement un premier signal externe d'une largeur de K bits à la première partie de bus et d'un second élément de porte (G3) pour coupler sélectivement un second signal externe d'une largeur de K bits à la première partie de bus, les premier moyens sont couplés à chacun des premier et second éléments de porte (G2, G3) pour fournir sélectivement le signal de validation de sortie (ROE) à au moins l'un des premier et second éléments de porte (G2, G3) en réponse à quoi les troisièmes moyens de porte recevant ledit signal couplent un signal externe respectif à la première partie de bus de sorte que le signal externe respectif et une microinstruction sont simultanément introduits dans le module de commande arithmétique (101) sur la première partie de bus.

7. Système de traitement d'informations selon la revendication 6, caractérisé en ce que les premiers moyens fournissent ledit signal pour amener le premier élément de porte (G2) à être couplé à la première partie de bus seulement pendant une initialisation du système de traitement d'informations.

8. Système de traitement d'informations selon l'une quelconque des revendications 1 à 7, caractérisé en ce que le bus d'entrée/sortie (107) a une largeur de données de 2L bits et est adapté à être couplé à un dispositif d'entrée/sortie capable de transférer des données d'une largeur de L bits et à un autre dispositif d'entrée/sortie capable de transférer des données d'une largeur de 2L bits.

9. Système de traitement d'informations selon l'une quelconque des revendications 1 à 8, caractérisé en ce que la mémoire principale est amenée à fonctionner de façon synchrone avec le module de commande arithmétique (101).

10. Système de traitement d'informations selon l'une quelconque des revendications 2 et 9, caractérisé en ce que les quatrièmes moyens de porte (G5, G6, G7) couplent sélectivement le bus mémoire (MAL, MDL) et la seconde partie de bus quand les première et seconde parties de bus sont amenées à être couplées par les premiers moyens de porte (G4) et qu'il est accédé à la mémoire principale par le module de commande arithmétique (101), et couplent en outre la mémoire principale au module de commande arithmétique (101) pour fournir un signal au module de commande arithmétique (101) qui indique l'achèvement d'un accès en mémoire principale par le module de commande arithmétique (101), ce module de commande arithmétique (101) commençant une opération suivante seulement à la suite de la réception d'un signal indiquant l'achèvement d'accès.

11. Système de traitement d'informations selon l'une quelconque des revendications 2 et 9, caractérisé en ce que les quatrièmes moyens de porte (G5, G6, G7) couplent sélectivement le bus mémoire (MAL, MDL) et la seconde partie de bus quand les première et seconde parties de bus sont amenées à être couplées par les premiers moyens de porte (G4) et qu'il est accédé à la mémoire principale par le module de commande arithmétique (101), et en ce que d'autres moyens couplent la mémoire principale au module de commande arithmétique (101) pour fournir un signal au module de commande arithmétique (101) qui indique l'achèvement d'un accès en mémoire principale par le module de commande arithmétique (101), ce module de commande arithmétique (101) déterminant si la sortie de signaux indiquant l'achèvement d'accès par le moyen de mémoire à l'intérieur d'un temps prédéterminé après que l'accès de la mémoire principale a commencé et amenant le système de traitement d'informations à produire un signal d'erreur si le signal indiquant l'achèvement d'accès n'est pas fourni à l'intérieur du temps prédéterminé et à continuer le traitement.

12. Système de traitement d'informations selon l'une quelconque des revendications 1 à 11, caractérisé en ce que le module de commande arithmétique (101) comprend des moyens pour, en relation avec au moins un bit du signal externe,
(a) commencer une opération suivant seulement à la suite de la réception d'un signal d'achèvement d'accès, ou
(b) déterminer si l'accès de la mémoire principale est commencé et amener le système de traitement d'informations à produire un signal d'erreur si le signal d'achèvement d'accès n'est pas fourni à l'intérieur du temps prédéterminé et à continuer le traitement.
